# DEMANDE DE BREVET EUROPEEN

(11) **EP 4 083 533 A1**
(43) Date de publication de la demande: **02.11.2022**
(21) Numéro de dépôt: 22169144.7
(22) Date de dépôt: 21.04.2022
(51) Int. Cl.: F24F 13/02, F16K 1/00, F16L 27/107, F24F 13/08, F16K 7/06, F16L 55/027, B64D 13/00

(54) **RACCORD FLUIDIQUE ENTRE DEUX CONDUITS REGULATEUR DE DEBIT**

(30) Priorité: 28.04.2021 FR 2104391
(71) Demandeur: AIRBUS OPERATIONS (S.A.S.), 31060 Toulouse (FR)
(72) Inventeur: GOUPIL, Frédéric, 31060 TOULOUSE (FR); REYNES, Didier, 31060 TOULOUSE (FR)
(74) Mandataire: Sarraméa, Claude

(57) **Abrégé**

L'invention a pour objet un raccord fluidique destiné à connecter deux conduits (4, 6) d'un système tel qu'un système de conditionnement d'air. Le raccord (8) est constitué d'au moins un matériau élastique et comprend un conduit (9) entouré par un collier de serrage (12) réglable permettant en le serrant de le déformer de manière à réduire l'espace intérieur du conduit. Le serrage du collier (12) permet de réguler facilement et rapidement le débit du fluide circulant dans les conduits (4, 6).

## Description

La présente invention concerne les systèmes de régulation de débit permettant de réguler un flux dans des conduits de fluide d'un système tel qu'un système de conditionnement d'air.

Dans un aéronef, de nombreuses canalisations conduisent des fluides dont le débit doit être régulé. Ainsi par exemple l'aéronef est équipé d'un système de conditionnement d'air. L'air circule dans les canalisations pour alimenter la cabine ou le cockpit. La distribution du débit de certaines canalisations doit être adaptée en fonction de la configuration de la cabine de l'aéronef choisie par une compagnie aérienne. Les canalisations sont alors munies de dispositifs de modification du débit. En général, ils sont fixés à l'intérieur desdites canalisations et lorsque le débit doit être modifié, il est nécessaire de démonter la canalisation pour changer le dispositif de régulation.

La présente invention vise à proposer un raccord fluidique permettant de réguler le débit et de modifier la régulation sans avoir à démonter ou changer les canalisations.

A cet effet, la présente invention concerne un raccord fluidique destiné à connecter deux conduits caractérisé en ce qu'il est constitué d'au moins un matériau élastique et en ce qu'il comprend un conduit de forme polylobée entouré par un collier de serrage réglable permettant en le serrant de le déformer de manière à réduire l'espace intérieur du conduit et à adapter le débit du flux circulant dans le raccord lorsqu'il est associé aux conduits.

Le serrage du collier permet de réguler facilement et rapidement le débit du fluide circulant dans les conduits.

L'invention prévoit au moins l'une des caractéristiques optionnelles suivantes, prises isolément ou en combinaison.

Le raccord est constitué d'élastomère.

Le collier comprend des marquages permettant d'estimer le serrage atteint.

Les marquages comprennent des traits visibles sur la bride du collier.

Le raccord comprend deux saillies vers l'extérieur de celui-ci de part et d'autre du conduit formant épaulement.

Les saillies sont formées par un élargissement puis une diminution du périmètre du conduit formant raccord.

Le conduit est de forme annulaire polylobé entre les saillies.

Les saillies forment soufflet afin de faciliter la rétractation radiale de la partie du conduit intercalée entre elles.

La présente invention concerne également un ensemble fluidique comprenant deux conduits et un raccord présentant une ou plusieurs des caractéristiques précédentes, caractérisé en ce que chaque extrémité dudit raccord est connectée à l'une des extrémités de chacun des conduits, le serrage du collier permettant de réguler le débit du fluide circulant dans les conduits.

La présente invention concerne également un système de conditionnement d'air comprenant un tel ensemble fluidique.

La présente invention concerne également un aéronef pourvu d'un tel système de conditionnement d'air.

D'autres buts, caractéristiques et avantages ressortiront de la description de l'invention qui va suivre, description donnée à titre d'exemple uniquement non limitatif, en référence aux dessins ci-annexés dans lesquels :
[Fig. 1] est une vue en perspective d'un ensemble fluidique comprenant un raccord et deux conduits selon la présente invention ;
[Fig. 2] est une vue en perspective de côté du raccord selon la figure 1 à l'état non déformé ;
[Fig. 3] est une vue en perspective de côté du raccord selon la figure 2 à l'état déformé ;
[Fig. 4] est une vue en perspective selon un autre angle du raccord selon la figure 2.

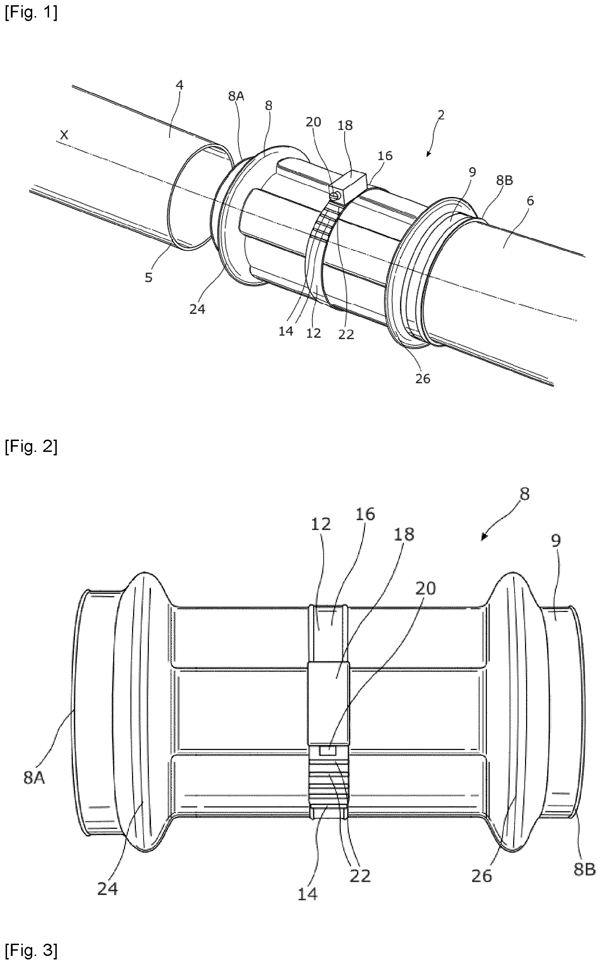

La présente invention se rapporte à un ensemble fluidique 2 représenté sur la figure 1 comprenant deux conduits 4, 6 raccordés entre eux par l'intermédiaire d'un raccord 8 fluidique. L'ensemble fluidique 2 fait partie d'un système plus global dans lequel un fluide circule et dont le débit nécessite d'être adapté. A titre illustratif, le système de conditionnement d'air d'un aéronef comme vu plus haut requiert de nombreuses canalisations pour faire circuler l'air dans la cabine ou le cockpit pourvues de dispositif de régulation. Chaque extrémité 8A, 8B du raccord 8 fluidique est fixée à une extrémité 5 (l'autre extrémité n'est pas visible car recouverte par le raccord) libre du conduit respectivement 4, 6 par tout type de moyen connu et par exemple par l'intermédiaire d'un collier de serrage, par vissage, soudage, collage ou autre. Dans la forme illustrée, les conduits 4, 6 et le raccord fluidique 8 présentent la même forme de section au niveau de la connexion entre eux avec des diamètres légèrement différents pour permettre leur assemblage, l'un pouvant ainsi s'insérer à l'intérieur de l'autre : les extrémités des conduits 4 et 6 sont insérées à l'intérieur du conduit 9 et fixés au raccord à l'aide d'un collier de serrage non illustré. Dans la forme de réalisation illustrée sur les figures 1 à 4, le raccord fluidique 8 se présente sous la forme d'un conduit 9 cylindrique comme les conduits 4 et 6 mais toute autre forme plus complexe est possible ; les conduits 4, 6 et le raccord 8 fluidique présentent une section circulaire mais toute autre forme de section est possible telle que elliptique, ovoïde ou autre. La direction longitudinale est la direction de l'axe X central du conduit formant le raccord 8, ou au moins au niveau de ses extrémités 8A et 8B. Un plan transversal est un plan perpendiculaire à cet axe.

Le raccord fluidique 8 est élastique : il est constitué d'au moins un matériau élastique. Le conduit 9 du raccord est ceinturé, entouré par un collier 12 de serrage réglable permettant en le serrant, comme montré sur la figure 3 par les flèches, de le déformer en en réduisant l'espace intérieur (ou plus précisément le volume de celui-ci) et par la même en réduisant la fenêtre de passage pour le fluide. Le collier 12 de serrage est un composant différent des moyens de fixation à savoir dans l'exemple illustré des colliers de serrage utilisés pour fixer le raccord aux conduits ; il peut être de la même forme que lesdits moyens de fixation à savoir sous la forme d'un collier de serrage. Sur au moins une partie voire l'ensemble du conduit 9, suivant le serrage, la section du conduit (ou plus précisément l'aire de celle-ci) dans un plan transversal est réduite. Sur la figure 3 en comparaison avec la figure 2, le diamètre du collier est plus faible et l'aire intérieure de toute section du conduit déformé du raccord dans un plan transversal est réduite. De cette manière, il est possible d'adapter le débit du flux circulant dans le raccord 8 et donc dans les conduits 4, 6 associés au raccord. Le matériau est choisi élastique de manière à reprendre sa forme initiale lorsque le collier 12 est desserré. Dans la forme illustrée, le collier 12 est installé dans une position centrale du raccord à savoir ici à équidistance des extrémités 8A, 8B. Le raccord est fait d'un ou plusieurs matériaux élastiques. Dans une forme de réalisation possible, le raccord est constitué d'un seul matériau, l'élastomère.

Comme montré sur les figures 1 à 4, le collier 12 comprend des signes de marquage 14 permettant de définir la réduction de la section de passage et d'avoir une fonction d'indicateur. Selon la forme de réalisation illustrée, le collier se présente sous la forme d'une bride 16 par exemple en plastique rectangulaire dont les extrémités sont liées par un dispositif 18 de serrage de type à crémaillère ou autre. Dans la forme illustrée, il s'agit d'un dispositif 18 de serrage de type Serflex (marque déposée) à vis 20. Lorsque l'on tourne la vis 20, le dispositif de serrage provoque le serrage du collier. Le collier 12 est autobloquant à savoir que lorsque l'on arrête d'actionner la vis 20, le collier reste bloqué en position (ou dans une position proche suivant le mécanisme utilisé dans le dispositif de serrage). Dans la forme de réalisation illustrée, le marquage est réalisé sous la forme de traits 22 visibles. Les traits 22 sont parallèles entre eux et transversaux par rapport à la direction longitudinale de la bride. Dans la forme illustrée, ils sont de couleur différente de la bride. Dans la forme illustrée, la couleur choisie est bien distinctive de la couleur grise de la bride à savoir par exemple de couleur rouge pour améliorer la visibilité des traits. Les traits 22 sont répartis de manière homogène à savoir à équidistance l'un de l'autre mais ils pourraient ne pas l'être selon une autre forme de réalisation. Ils permettent d'évaluer suivant le nombre de traits visibles restants le serrage obtenu. D'autres types de marquage peuvent être utilisés que ce soit en remplacement des traits ou en combinaison avec ceux-ci comme par exemple des formes en relief.

Le raccord 8 comprend deux saillies 24, 26, en relief par rapport à la surface extérieure du raccord et vers l'extérieur de celui-ci et sur toute sa périphérie transversalement ou au moins une partie de celle-ci, de part et d'autre d'un espace autour duquel le collier 12 est mis en place : les saillies 24, 26 forment épaulement pour le collier 12. Elles peuvent se présenter sous une forme continue ou discontinue. Ces saillies 24, 26 maintiennent ainsi en place le collier dans la direction longitudinale du raccord. Elles empêchent le collier 12 de se déplacer longitudinalement en l'encadrant de part et d'autre. Lorsque le collier 12 est en place, les saillies 24, 26 peuvent être disposées à distance de celui-ci comme montré sur les figures et ne pas le jouxter ; dans la forme illustrée, elles sont plus proches des extrémités 8A, 8B que du collier 12 mais toute autre configuration est possible comme d'être à équidistance ou d'être plus proches du collier 12 que des extrémités 8A, 8B. Dans la forme de réalisation illustrée, les saillies 24, 26 sont formées par un élargissement puis une diminution, progressifs du périmètre du conduit du raccord 8 ce qui donne à chaque saillie une forme semi-annulaire formant soufflet ; les courbes formées en section par un plan longitudinal central au raccord respectivement par l'élargissement et la diminution du périmètre du raccord sont symétriques par rapport au plan transversal traversant le raccord au niveau du périmètre le plus grand de la saillie. Les saillies 24 et 26 ont une forme identique. Les saillies ont aussi pour fonction de faciliter la rétractation radiale de la partie du conduit 9 intercalée entre elles : lorsque le collier 12 est serré, les saillies en se déformant évitent de générer une trop forte tension au niveau de la peau, de l'enveloppe du raccord.

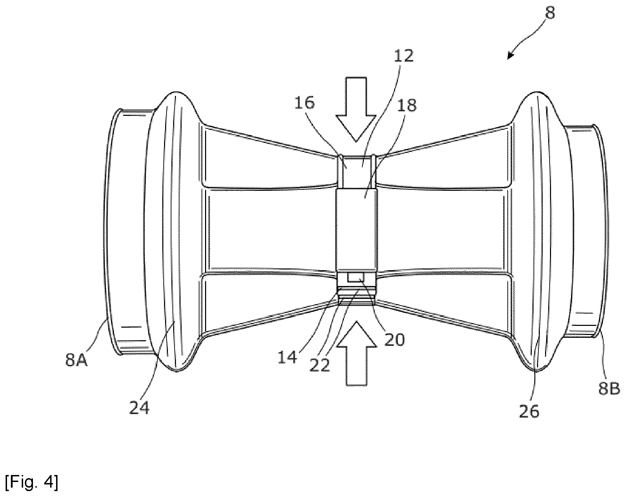

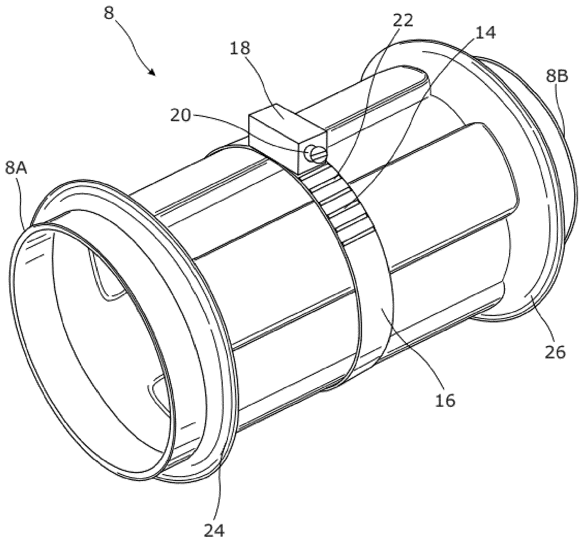

Dans la forme illustrée sur les figures 1 et 2, le conduit 9 à l'état non déformé entre les saillies 24 et 26 se présente sous la forme d'un conduit cylindrique annulaire polylobé, à savoir présentant au moins deux lobes et plus précisément ici quadrilobé. Le conduit présente une succession de parties en saillie séparées par des creux. Les parties en saillie peuvent présentés tout type de forme et par exemple une section transversale au contour arrondi comme un arc de cercle ou comme sur la figure 4 une section transversale semi rectangulaire dont les coins sont arrondis. Cette forme permet au conduit de se rétracter de manière plus homogène. Dans la forme de réalisation illustrée sur les figures 1 à 4, la section du conduit 9 est circulaire en dehors de la partie annulaire polylobée se trouvant entre les saillies 24 et 26 et les saillies 24, 26 sont formées par un élargissement puis une diminution du diamètre du conduit formant raccord ce qui induit un élargissement et une diminution du périmètre.

Lorsque les conduits 4, 6 d'un système sont mis en place, comme ceux d'un système de conditionnement d'air dans un aéronef, chaque extrémité 8A, 8B dudit raccord est connectée à l'une des extrémités de chacun des conduits 4, 6. La figure 2 montre le raccord 8 à l'état non déformé à savoir avec un collier non serré. Le collier se trouve placé entre les extrémités connectées aux conduits 4, 6. Il est également placé entre les conduits. Cinq traits 22 sont visibles. Comme montré sur la figure 3, le collier 12 est alors serré jusqu'à ce que le niveau de débit du flux souhaité soit atteint. Ce niveau peut être lu directement sur la bride 16 au travers du marquage 14. Sur la figure 3, plus que deux traits sont visibles. Le serrage du collier permet d'adapter facilement et rapidement le débit du fluide circulant dans les conduits. Le conduit 9 étant élastique, en desserrant le collier, le raccord reprend sa forme initiale et peut donc prendre toutes les formes possibles pour une adaptation de débit différente, qu'il soit nécessaire de serrer ou desserrer le collier. Le niveau d'adaptation du débit peut être modifié autant de fois que souhaité selon la configuration du système requis et ceci sans avoir à retirer ou modifier une pièce du système global et sans compromettre l'étanchéité dans le couplage des conduits entre eux ou avec le raccord.

Il n'est donc plus nécessaire d'installer un dispositif d'adaptation du débit à l'intérieur des conduits de l'ensemble fluidique. Il n'est plus nécessaire non plus d'avoir à dimensionner les conduits. Il est facile et rapide de reconfigurer le système de conditionnement d'air ou tout système comprenant un tel ensemble fluidique.

## Revendications

1. Raccord fluidique destiné à connecter deux conduits (4, 6) **caractérisé en ce qu'**il est constitué d'au moins un matériau élastique et **en ce qu'**il comprend un conduit (9) de forme polylobée entouré par un collier de serrage (12) réglable permettant en le serrant de le déformer de manière à réduire l'espace intérieur du conduit et à adapter le débit du flux circulant dans le raccord lorsqu'il est connecté aux conduits.

2. Raccord fluidique selon la revendication 1, **caractérisé en ce qu'**il est constitué d'élastomère.

3. Raccord fluidique selon l'une des revendications 1 ou 2, **caractérisé en ce que** le collier (12) comprend des marquages permettant d'estimer le serrage atteint.

4. Raccord fluidique selon la revendication 3, **caractérisé en ce que** les marquages comprennent des traits (22) visibles sur la bride du collier (12).

5. Raccord fluidique selon l'une des revendications 1 à 4, **caractérisé en ce qu'**il comprend deux saillies (24, 26) vers l'extérieur de celui-ci de part et d'autre du conduit (9) formant épaulement.

6. Raccord fluidique selon la revendication 5, **caractérisé en ce que** les saillies (24, 26) sont formées par un élargissement puis une diminution du périmètre du conduit formant raccord (8).

7. Raccord fluidique selon l'une des revendications 5 ou 6, **caractérisé en ce que** le conduit (9) est de forme annulaire polylobé entre les saillies (24, 26).

8. Raccord fluidique selon l'une des revendications 5 à 7, **caractérisé en ce que** les saillies forment soufflet afin de faciliter la rétractation radiale de la partie du conduit (9) intercalée entre elles.

9. Ensemble fluidique comprenant deux conduits et un raccord selon l'une des revendications 1 à 8, **caractérisé en ce que** chaque extrémité (8A, 8B) dudit raccord est connectée à l'une des extrémités (5, autre extrémité non visible) de chacun des conduits, le serrage du collier permettant de réguler le débit du fluide circulant dans les conduits.

10. Système de conditionnement d'air comprenant un ensemble fluidique selon la revendication 9.

11. Aéronef comprenant un système de conditionnement d'air selon la revendication 10.
